# EUROPEAN PATENT APPLICATION

(11) **EP 1 273 938 A2**
(43) Date of publication of application: **08.01.2003**
(21) Application number: 02013723.8
(22) Date of filing: 20.06.2002
(51) Int. Cl.: G02B 6/16

(54) **Fiber apparatus having improved grating fabrication and performance characteristics**

(30) Priority: 04.07.2001 US 899631
(71) Applicant: FITEL USA CORPORATION, (A Delaware Corporation), Corporate Counsel, Norcross, Georgia 30071 (US)
(72) Inventor: Atkins, Robert Michael, Millington, New Jersey 07946 (US); Digiovanni, David John, Montclair, New Jersey 07042 (US); Oh, Kyunghwan, Sommerset, New Jersey 08873 (US); Reed, William Alfred, Summit, New Jersey 07901 (US); Westbrook, Paul Stephen, Chatham, New Jersey 07928 (US); Windeler, Robert Scott, Annandale, New Jersey 08801 (US)
(74) Representative: Schoppe, Fritz, Dipl.-Ing.

(57) **Abstract**

Embodiments of the invention include a singlemode optical fiber (10) having an antimony (Sb) doped core region (12), a suitable cladding region (14) formed on the core region, and one or more gratings (16) written in the optical fiber. Optical fibers manufactured according to embodiments of the invention provide faster growth of grating strength, higher thermal stability, and longer photosensitive wavelength compared to conventional Ge doped silica optical fibers. The optical fiber is fabricated for applications such as fiber grating applications where the index of the core is modulated by UV radiation. Also, the addition of Sb in the core region of the singlemode optical fiber provides higher temperature (for example, greater than 100° C) applications of fiber gratings and a reduced degradation of the band rejection efficiency. Also, the optical fibers are more conducive to direct and non-destructive grating writing over polymer jackets with a longer photosensitive wavelength in the UV range.

## Description

### Field of the Invention

The invention relates to optical fibers. More particularly, the invention relates to singlemode optical fibers used in fiber grating applications.

### Background of the Invention

Optical fiber gratings are periodic changes in the index of refraction of the photosensitive core region (or cladding region) of an optical fiber. Due to the useful natures of fiber gratings such as flexible control of spectral and dispersion response, low insertion loss, and fiber compatibility, various types of devices are being developed based on fiber gratings. Conventionally, fiber gratings are inscribed on germanium (Ge) doped silica fibers, that is, optical fibers having a Ge doped silica core region. Germanium-related defect centers are photosensitive to the ultraviolet (UV) radiation used to write the gratings and show a strong absorption centered at approximately 242 nanometers (nm). Hydrogen or deuterium molecules are loaded to increase the density of the photosensitive defect sites. Such material perspectives of conventional photosensitive fibers impose some restrictions in grating fabrication processes, particularly processes used in mass production of gratings.

The strength of gratings inscribed on Ge doped fibers varies as a complex function of exposure time and UV exposure conditions. Typically, exposure time is on the order of hundreds of seconds, during which time precise optical alignment needs to be maintained. It would be desirable to have a faster photosensitivity response to reduce both the burden of alignment and production time.

Although elements such as boron and tin conventionally have been co-doped with germanium to increase the photosensitivity, such co-doped fiber still suffers from relatively week temperature stability. Grating strength does decay as the fiber grating is annealed at elevated temperatures due to dynamics of the trapping of thermally activated carriers in a distribution of defect sites. Significant reduction of grating strength occurs when annealing the grating over 100° Celsius (C) for more than approximately 10 hours.

The photosensitive wavelength of a Ge doped fiber typically is determined by the absorption spectrum of the Ge-relaled defect centers whose peak is located at 242 nm. However, the acrylate coating protecting the bare glass fiber is not transparent to the peak wavelength. Thus, a manual process of coating removal and re-coating to expose the bare glass fiber for grating inscription is performed. UV-transparent coatings have been developed to alleviate the issue, but the transmission cut-off lies beyond 250 nm, where photosensitivity significantly decreases. Conventional photosensitive fibers with a UV-transparent coating have not provided a fundamental solution for the process of coating removal and re-coating, which process affects the mechanical strength of the devices as well as the mass production costs.

Therefore, it would be desirable to have a photosensitive fiber in which gratings are written in a shorter period of time, with the added capability of being able to write gratings through the fiber's protective polymer coating, and the written grating could sustain annealing processes.

### Summary of the Invention

The invention is as defined by the claims. Embodiments of the invention include a singlemode optical fiber for transmitting optical information in a communication system. Embodiments of the invention include a silica fiber that has an antimony (Sb) doped core region, a silica or other suitable cladding region formed on the core region, and one or more gratings written in the optical fiber. Optical fibers according to embodiments of the invention have increased grating strength, higher thermal stability, and longer photosensitive wavelengths compared to conventional Ge doped silica optical fibers. The optical fiber is used in applications such as fiber grating applications where the index of the core is modulated by UV radiation. Also, the addition of Sb in the core region of the singlemode optical fiber provides higher temperature (for example, greater than 100° C) applications of fiber gratings and a reduced degradation of the band rejection efficiency. Also, compared to conventional arrangements, optical fibers according to embodiments of the invention are more conducive to direct and non-destructive grating writing over polymer jackets with a longer photosensitive wavelength in the UV range.

### Brief Description of the Drawings

In the drawings:
Fig. 1 is a schematic cross-section of an optical fiber according to embodiments of the invention;
Fig. 2 is a simplified schematic diagram of a method for making an optical fiber according to embodiments of the invention;
Fig. 3 is a graphical diagram of the absorption spectrum of an antimony (Sb) doped silica core region in an optical fiber according to embodiments of the invention;
Fig. 4 is a graphical diagram of the refractive index profile of Sb doped fibers according to embodiments of the invention;
Fig. 5 is a graphical diagram of the temporal dependence of photoinduced refractive index change in Sb doped fibers according to embodiments of the invention compared to conventional Ge doped fibers;
Fig. 6 is a graphical diagram of the ultraviolet (UV) dosage dependence of photoinduced refractive index change in Sb doped fibers according to embodiments of the invention compared to various conventional Ge doped fibers;
Fig. 7 is a graphical diagram of the relative grating strength as a function of annealing temperature of Sb doped fibers according to embodiments of the invention compared to conventional Ge doped fibers;
Fig. 8 is a graphical diagram of the transmission spectrum of a Bragg grating written through the protective polymer jacket by irradiation of a 257 nanometer (nm) laser over a phase mask; and
Fig. 9 is a simplified schematic diagram of an optical system in which embodiments of the invention are useful.

### Detailed Description

In the following description similar components are referred to by the same reference numeral to enhance the understanding of the invention through the description of the drawings. Also, unless otherwise explicitly specified herein, the drawings are not drawn to scale.

Although specific features, configurations and arrangements are discussed hereinbelow, it should be understood that such is done for illustrative purposes only. A person skilled in the relevant art will recognize that other steps, configurations and arrangements are useful without departing from the spirit and scope of the invention.

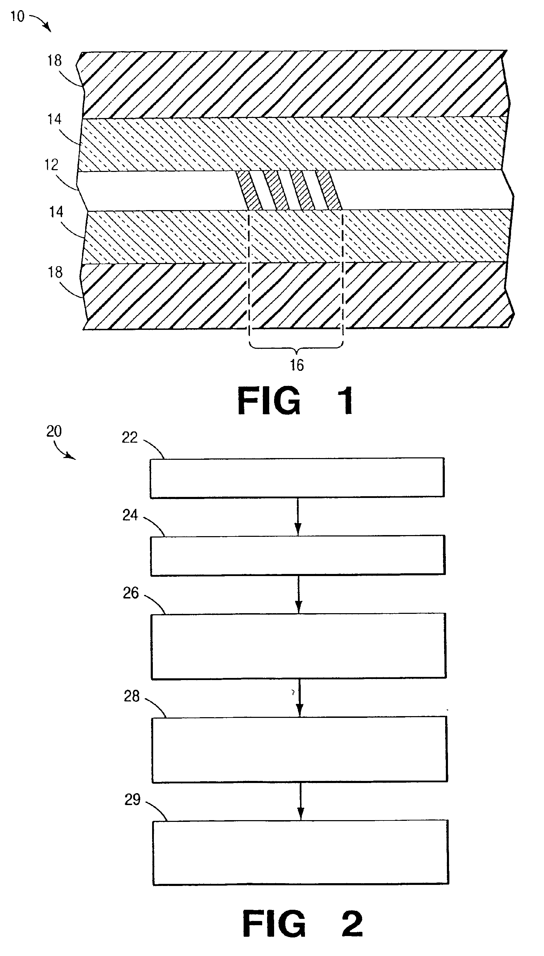

Referring now to Fig. 1, shown is a coated optical fiber 10 in which embodiments of the invention are useful. The optical fiber 10 is a singlemode optical fiber that includes a light-carrying core region 12 and a cladding region 14 surrounding the core region 12. The core region 12 and the cladding region 14 generally are made of glass such as silica (that is, silicon dioxide, SiO₂) and typically are drawn from a glass preform. The core region 12 has an index of refraction n₁. The cladding region 14 has an index of refraction n₂ that is less than the index of refraction n₁ of the core region 12.

Singlemode fiber is optical fiber designed to support only the fundamental mode (LP₀₁) of a particular wavelength, whereas multimode fiber supports many different modes (paths) of a particular wavelength. Singlemode fiber, which has a bandwidth that is much greater than multimode fiber, transmits optical signals at proportionally greater transmission rates.

Because the optical fiber 10 is a singlemode fiber, the diameter of the core region 12 is less than approximately 10 microns (µm), for example, within the range of approximately 5-8 µm. By comparison, for multimode fiber, the diameter of the core region of a multimode fiber is approximately 50 or 62.5 µm. For both singlemode and multimode fibers, the total diameter of the cladding region 14 surrounding the core region 12 typically is approximately 125 µm.

The core region 12 (or, alternatively, the cladding region 14) includes one or more gratings 16 written therein. Typically, gratings are written by imprinting (photoinducing) an interference pattern into the core region by ultraviolet (UV) light or other suitable light. The interference pattern is created, for example, external to the optical fiber by a phase mask, amplitude mask of other suitable means. According to embodiments of the invention, the gratings 16 are Bragg gratings, long period gratings (LPG) or other suitable gratings.

The cladding region 14 is covered, for protection and strength, with one or more coating layers, for example, a primary coating layer and a secondary coating layer, typically resulting in a total outer diameter of approximately 250 - 1000 µm. The secondary coating layer typically has a relatively high modulus, for example, 10⁹ Pascals (Pa), to withstand handling. The primary coating layer typically has a relatively low modulus, for example, 10⁶ Pa, to provide a cushion that reduces microbending losses. The coating layers, which are shown collectively as layer 18, are made of a polymer or other suitable material.

According to embodiments of the invention, silica optical fiber includes a core region that is doped with antimony (Sb) but is free of germanium (Ge), phosphorus (P) or other photosensitive elements. Alternatively, the core region is doped with Sb and one or more conventional dopants such as Ge and P. The performance characteristics of gratings such as Bragg gratings written in such Sb doped fibers display improved features over conventional fibers such as Ge doped silica fibers. Such improved features include, for example, faster growth of grating strength, higher thermal stability, and longer photosensitive wavelength compared to conventional Ge doped silica optical fibers.

Embodiments of the invention include optical fiber comprising a Sb doped silica core region and silica cladding. Alternative embodiments of the invention include optical fiber comprising a core region, doped with Sb and one or more conventional dopants such as Ge and P, and silica cladding. The optical fiber is fabricated for applications such as fiber grating applications where the index of the core is modulated by UV radiation. Compared to conventional fibers such as Ge doped silica fibers, embodiments of the invention provide faster growth of grating strength, higher thermal stability, and longer photosensitive wavelength. The addition of Sb into the fiber core region provides higher temperature applications of fiber gratings, for example, greater than 100° Celsius (C), and a reduced degradation of the band rejection efficiency. Also, compared to conventional arrangements, Sb doped fibers according to embodiments of the invention are more conducive to direct and non-destructive grating writing over polymer jackets with a longer photosensitive wavelength in the UV range.

Although Sb ions have been doped in optical fibers, such work involves the manufacture of multimode fibers for use in transmission applications. See, for example, "Fabrication Of Antimony Oxide-Doped Silica Fibres By The VAD Process," M. Shimizu, Y. Ohmori, and M. Nakahara, Electronics Letters, col. 21, pp. 872-873, 1985, and "Antimony Oxide-Doped Silica Fibers Fabricated By The VAD Method," M. Shimizu and Y. Ohmori, IEEE Journal of Lightwave Technology, vol. LT-5, pp. 763-769, 1987, both of which discuss the manufacture of graded-index multimode silica fibers containing antimony (Sb) oxide using the Vapor Axial Deposition (VAD) process. Thus, the disclosed work focuses on transmission fiber performance characteristics such as reducing hydroxyl-ion (OH) absorption by reducing the OH ion content, and reducing other factors that contribute to transmission loss. However, according to embodiments of the invention, Sb doping is used with singlemode fibers that are used in grating applications. More specifically, the core region includes antimony oxide (Sb₂O₃) and silica or silicon dioxide (SiO₂). As discussed hereinabove, the Sb doping improves, for example, photosensitivity and grating strength characteristics of the singlemode optical fibers. Furthermore, singlemode Sb doped optical fibers according to embodiments of the invention provide lower loss when spliced with telecommunication fibers. Relatively low splice loss is important in device applications. For example, the splice loss between Sb doped optical fibers according to embodiments of the invention and conventional singlemode transmission fibers is less than approximately 0.03 dB.

According to embodiments of the invention, the doping concentration of Sb₂O₃ is within the range from approximately 1-20 mole %. For example, embodiments of the invention include Sb doped optical fibers having a optical fiber an optical fiber Typically, according to embodiments of the invention, optical fibers have a Sb₂O₃ doping concentration of approximately 3.5 mole %.

Referring now to Fig. 2, a method 20 for making optical fibers according to embodiments of the invention is shown. The method 20 includes the step 22 of forming the Sb doped core region 12. The Sb doped core region 12 is formed, for example, by the solution doping method discussed in "Solution Doping Technique For Fabrication Of Rare Earth Doped Optical Fibers," J.E. Townsend, S.B. Poole and D.N. Payne, Electronics Letters, vol. 23, pp. 329-331, or other suitable method. As discussed hereinabove, the core region 12 is formed to have a first index of refraction n₁.

Another step 24 is to form the cladding region 14 around the Sb doped core region 12. The cladding region 14 is formed to have an index of refraction n₂ that is less than that of the core region 12. The resulting structure typically is referred to as an optical fiber preform. The core and cladding regions in the optical fiber preform are dimensioned so that the ratio of their respective diameters corresponds to the desired ratio of the diameter of the core region 12 and the cladding region 14 of the optical fiber 10 drawn from the preform.

Once the optical fiber preform is made, another step 26 is to draw the optical fiber 10 from the optical fiber preform. Such drawing step 26 is performed, for example, in a conventional manner. Thus, the drawn optical fiber 10 is configured in accordance with embodiments of the invention.

Another step 28 is to form one or more gratings 16 in the optical fiber 10. That is, a plurality of index perturbations are written or otherwise formed in the core region 12 (and/or the cladding region 14). As previously discussed, gratings are written, for example, by exposing the optical fiber 10 to UV radiation through a phase mask, an amplitude mask or other appropriate device. Another step 29 in the method 20 is to form one or more protective coating layers 18 on the optical fiber 10, for example, as discussed hereinabove.

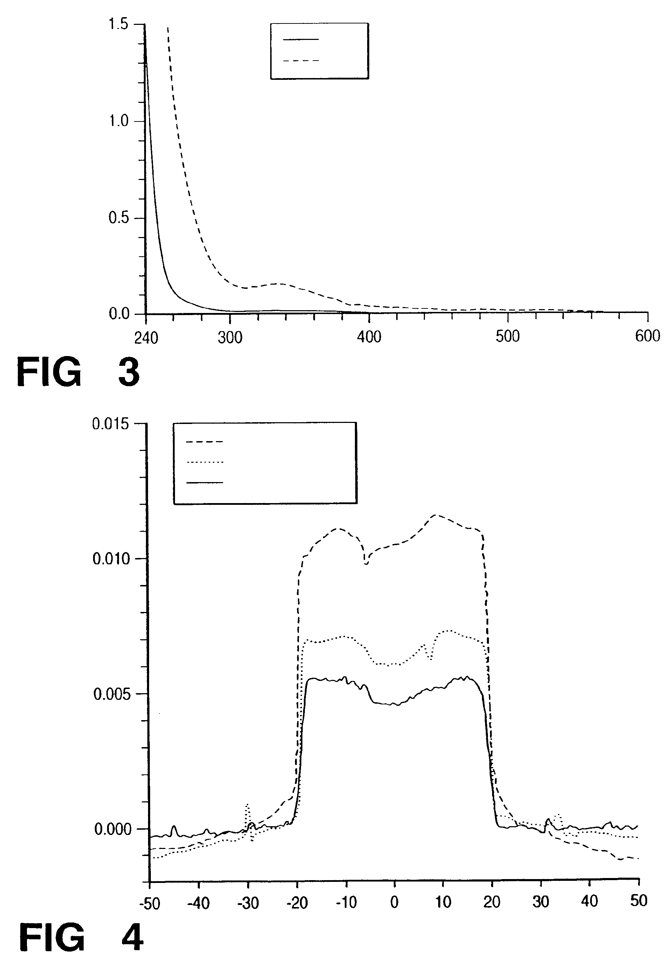

Referring now to Fig. 3, shown is the absorption spectrum of a Sb doped silica core region in an optical fiber. Conventionally, it was reported that Sb doped silica fiber demonstrates an extension of the UV absorption into the near visible range, for example, when it is treated in a reducing environment, such as in hydrogen or deuterium loading. Thus, the photosensitive wavelength is extended to a longer wavelength in Sb doped silica fiber by proper reduction treatment of the Sb ions.

Referring now to Fig. 4, shown is a graphical diagram of the refractive index profile of Sb doped fibers according to embodiments of the invention. The UV induced index change is measured for two types UV irradiation: a 242 nanometer (nm) pulsed laser and a 257 nm continuous wave (CW) laser. The measured index profiles are compared to that of a pristine fiber. As shown, an index change over 2×10⁻³ (0.2%) has been achieved for both 242 nm and 257 nm irradiation from deuterium loaded fibers. The amount of photo-induced refractive index change at 257 nm has been found to be comparable to that of 242 nm, which amount of change has not been observed in prior photosensitive fibers.

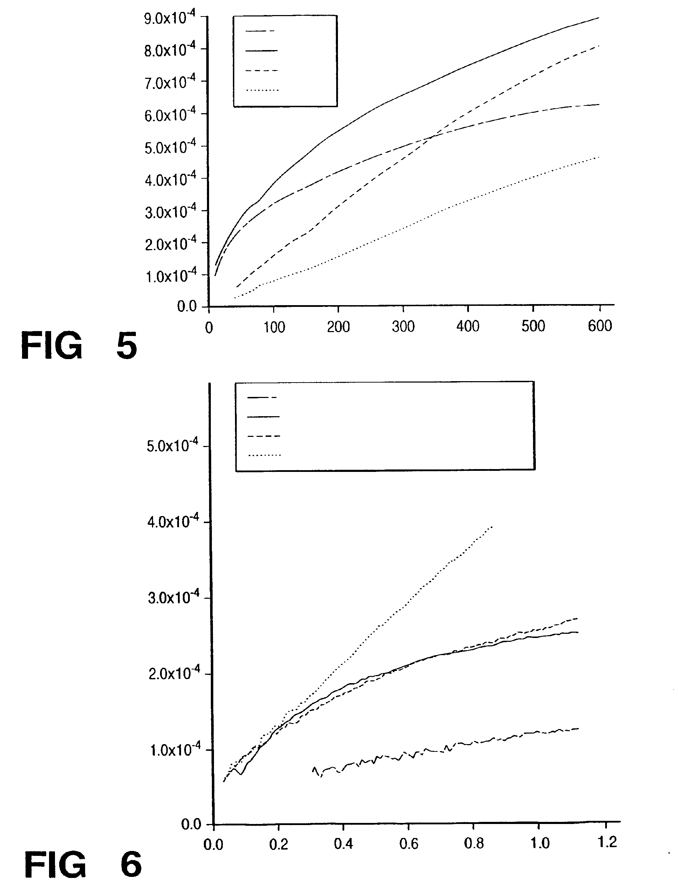

Referring now to Fig. 5, shown is a graphical diagram of the temporal dependence of photoinduced refractive index change in Sb doped fibers according to embodiments of the invention compared to conventional Ge doped fibers. The temporal dependence of photo-induced refractive index change has been compared for Bragg gratings in Ge doped fiber and Sb doped fiber written by a pulsed 242 nm laser. The refractive index difference of the core in both pristine fibers was 0.3%. In conventional Ge doped fibers, the growth of the index change shows a linear behavior. In the Sb doped fibers, the index change shows a rapid growth with an exponential behavior in the beginning. For some fiber grating applications, for example, wavelength stabilizers for EDFA pump laser diodes with a low reflectivity, the Sb doped fibers offer desirable features such as fast fabrication speed. Also, although Fig. 5 depicts the index change in Bragg gratings, the index changes and reduced fabrications speeds apply to long period gratings written in Sb doped fibers according to embodiments of the invention.

For example, for AC index changes of approximately 0.01% (that is, 1×10⁴), which typically are used for wavelength stabilizer applications, Sb doped fibers show a faster growth time compared to Ge doped fibers. More specifically, the AC change in index of refraction (Δn) in Sb doped fibers is greater than that of Ge doped fibers for an exposure time of up to approximately 300 seconds. Also, the DC change in index of refraction (Δn) is greater than that of germanium doped optical fibers.

Referring now to Fig. 6, shown is a graphical diagram of the UV dosage dependence of photoinduced refractive index change in Sb doped fibers according to embodiments of the invention compared to various conventional Ge doped fibers. The growth of the index change as a function of total dosage of the 242 nm pulsed laser is shown for 4 different types of fibers: Sb doped fiber, conventional Ge doped fiber, Ge doped fiber with increased oxygen deficient defect centers, and Ge-B co-doped fiber. It should be noted that the amount of Ge in the Ge doped fiber with increased oxygen deficient defect centers and the Ge-B co-doped fiber is higher than that of conventional Ge doped fibers. Also, splice loss between these higher Ge fibers and conventional singlemode transmission fibers was relatively high, for example, in the range of approximately 0.5 dB, due mismatches in index profile and dopant diffusion.

By comparison, Sb doped fibers according to embodiments of the invention have an index profile designed to more closely match those of conventional singlemode transmission fibers. Accordingly, splice loss is less than 0.03 dB, which is at least an order of magnitude less than conventional splicing arrangements. In the graph, the Sb doped fiber shows a comparable photosensitivity to that of the Ge doped fiber with increased oxygen deficient defect centers and that of in the Ge-B co-doped fiber at the lower dosage range. Given the relatively high contents of Ge in the Ge-containing fibers, the Sb doped fiber shows a higher photosensitivity for a given dosage, especially in the dosage range of 0.3 kJ/cm².

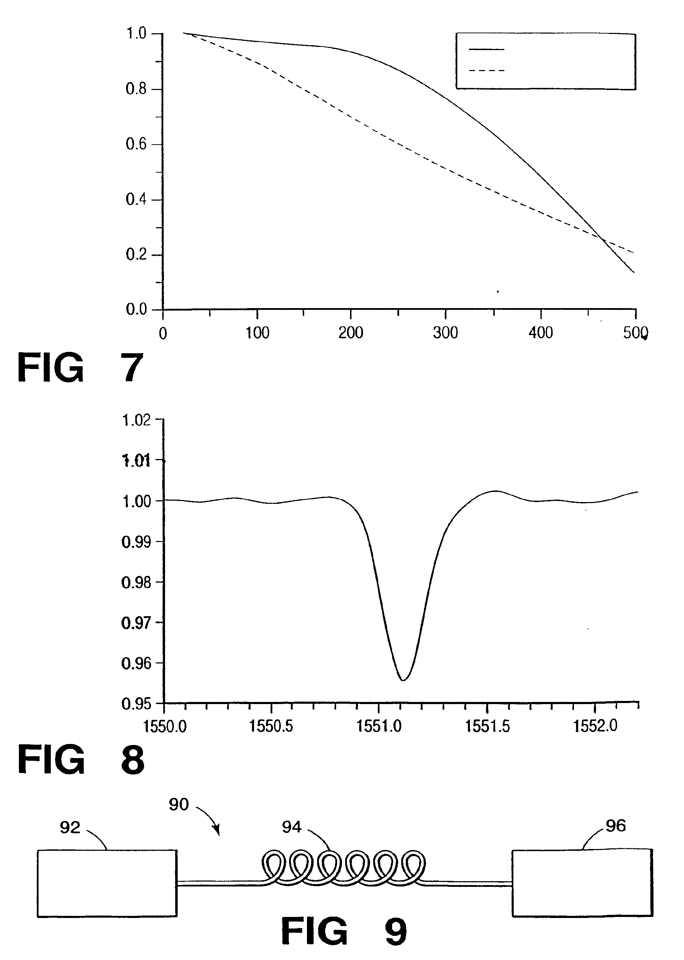

Referring now to Fig. 7, shown is a graphical diagram of the temperature stability of Sb doped fibers according to embodiments of the invention compared to conventional Ge doped fibers. The annealing time at each temperature is over 10 hours. As shown, for annealing temperatures up to 200° C, Bragg gratings in the Sb doped fiber maintain a grating strength of over 90%, while the grating strength of Bragg gratings in the Ge doped fiber reduces by more than 25%. Also, for annealing temperatures up to 450° C, the grating strength in the Sb doped fiber is greater than that of Ge doped fiber.

According to embodiments of the invention, singlemode silica optical fiber doped with Sb oxides in the core region (or, alternatively, in the cladding region) demonstrate improved features compared to conventional optical fibers including Ge doped optical fibers. For example, Sb doped fibers according to embodiments of the invention typically have faster growth, a lower dosage requirement, and a higher temperature stability for fiber gratings inscribed therein than comparable Ge doped fibers.

Referring now to Fig. 8, shown is a graphical diagram of the transmission spectrum of a Bragg grating written through the protective polymer jacket by irradiation of a 257 nanometer (nm) laser over a phase mask. Compared to conventional fibers, fibers according to embodiments of the invention have greater photosensitivity at wavelengths longer than, for example, 257 nm, thus enabling direct grating writing over acrylate coating.

Referring now to Fig. 9, shown is a simplified block diagram of an optical communication system 90 according to embodiments of the invention is shown. The system 90 includes one or more sources 92 for transmitting optical information, an optical transmission medium 94 such as an optical cable including one or more optical fibers configured according to embodiments of the invention, for example, as discussed hereinabove, and one or more receivers 96 for receiving the transmitted information. For example, the optical transmission medium 94 includes one or more singlemode optical fibers used in applications such as fiber grating applications. The source 92, which is configured to transmit optical information, is coupled to the optical transmission medium 94, for example, in a conventional manner. The receiver 96, which is configured to receive the transmitted optical information, is coupled to the optical transmission medium 94, for example, in a conventional manner.

It will be apparent to those skilled in the art that many changes and substitutions can be made to the embodiments of the optical fibers herein described without departing from the spirit and scope of the invention as defined by the appended claims and their full scope of equivalents.

## Claims

1. A singlemode optical fiber medium (10) for transmitting optical energy within an optical communications system, comprising:
a core region (12) having an index of refraction n₁ and a diameter less than approximately 10 microns;
a cladding region (14) formed around the core region, the cladding region having an index of refraction n₂ less than n₁; and
at least one grating (16) formed in at least one of the core region and the cladding region,
**CHARACTERIZED IN THAT**
the core region further comprises an antimony (Sb) doped silica core region.

2. The apparatus as recited in claim 1, wherein the core region is doped with antimony in such a way that the DC change in index of refraction (Δn) is greater than that of germanium doped optical fibers.

3. The apparatus as recited in claim 1, wherein the core region is doped with antimony in such a way that the DC change in index of refraction (Δn) is greater than 0.01%.

4. The apparatus as recited in claim 1, wherein the core region is doped with antimony in such a way that the AC change in index of refraction (Δn) is greater than that of germanium doped optical fibers for an exposure time of up to approximately 300 seconds.

5. The apparatus as recited in claim 1, wherein the core region is doped with antimony in such a way that the relative grating strength is greater than 0.90 for an annealing temperature up to approximately 200° Celsius.

6. The apparatus as recited in claim 1, wherein the core region is doped with antimony in such a way that the relative grating strength is greater than that of germanium doped optical fibers for an annealing temperature up to approximately 450° Celsius.

7. The apparatus as recited in claim 1, wherein the core region includes antimony oxide (Sb₂O₃) and silica (SiO₂).

8. The apparatus as recited in claim 1, wherein the core region includes antimony oxide (Sb₂O₃), and wherein the doping concentration of the antimony oxide is within the range from approximately 1 mole % to approximately 20 mole %.

9. The apparatus as recited in claim 1, wherein the core region is doped with antimony and at least one other dopant selected from the group consisting of germanium (Ge) and phosphorus (P).

10. The apparatus as recited in claim 1, wherein the at least one grating is selected from the group consisting of Bragg gratings and long period gratings.
